# EUROPEAN PATENT SPECIFICATION

(11) **EP 0 282 995 B1**
(45) Date of publication and mention of the grant of the patent: **19.01.1994**
(21) Application number: 88104185.9
(22) Date of filing: 16.03.1988
(51) Int. Cl.: G11B 5/115, G11B 5/55, G11B 5/58

(54) **Electro-magnetic shield structure for shielding a servo magnetic head of a magnetic disk storage device**
Elektromagnetische Abschirmstruktur zum Abschirmen eines magnetischen Servokopfes eines Magnetplattenspeichergerätes
Structure de blindage électromagnétique pour blinder une tête magnétique d'asservissement d'un dispositif de stockage à disque magnétique

(30) Priority: 18.03.1987 JP 61094/87; 28.07.1987 JP 116447/87
(43) Date of publication of application: 21.09.1988
(73) Proprietor: FUJITSU LIMITED, Kawasaki-shi, Kanagawa 211 (JP)
(72) Inventor: Hiraoka, Sinzi 4-39, Kamishinjo 1-chome, Kawasaki-shi Kanagawa, 211 (JP); Matsuda, Kazuo, Kawasaki-shi Kanagawa,213 (JP); Ohyama, Takeshi, Nagano-shi Nagano, 380 (JP)
(74) Representative: Schmidt-Evers, Jürgen, Dipl.-Ing.

(56) References cited:
- EP-A- 0 146 217
- PATENT ABSTRACTS OF JAPAN vol. 10, no. 288 (P-502)(2344) 30 September 1986;& JP-A-61105783
- IBM TECHNICAL DISCLOSURE BULLETIN. vol. 19, no. 4, 4 September 1976, NEW YORK US pages 1437 - 1438; elliot et al: "magnetic shield for disk file"
- PATENT ABSTRACTS OF JAPAN vol. 9, no. 156 (P-368)(1879) 29 June 1985;& JP-A-6029986

## Description

### BACKGROUND OF THE INVENTION

The present invention relates to a magnetic disk storage device, where a magnetic servo-head and a magnetic data-head are disposed in a back to back situation in a space between two magnetic disks. In particular, it relates to a magnetic shield means for shielding a magnetic servo-head from noise issued from an adjacent magnetic data-head in a write operation.

A magnetic disk storage device is widely used at present as a non-volatile storage means being capable in storing a vast quantity of information, and having a compact size and high storing capacity. At present, the storage capacity of the device reaches, for instance, 400 mega bytes with a disk size of 5 inches. In the device, a plurality of magnetic disks (hereinafter simply referred to as disks) are stacked co-axially around a rotatable spindle and spaced in parallel from each other by a predetermined distance, forming a block, namely a disk assembly. The spindle is rotated by a driving motor with a high speed such as 3600 rpm.

The disk has layers of magnetic medium, such as γ-ferric oxide (γFe₂O₃) particles, coated on both surfaces of a disk substrate made of, for example, aluminum. Information is stored in the magnetic layer in the form of data bits sequentially arranged on a circular orbits referred to as a track. The data bits are created on the track of the disk through the relevant magnetic data-head (hereinafter simply referred to as data-head) by actuating the data-head in response to data signals supplied from a central controller of the storage device. This is referred to as a write operation, and the region on the surface of the disk where the data bits are formed are referred to as a data region. The data bits are accessed and read out by the data head during a read operation period. While, servo information, including address signals and servo signals, are stored in the form of servo bits preliminary formed in a servo region usually occupying a part of a surface of a disk. The servo bits are read through a magnetic servo-head (hereinafter simply referred to as a servo-head). Usually, a magnetic disk storage device has a plurality of data-heads and a servo-head. Each head, in general, comprises an electro-magnetic transducer and an air slider, being flexibly suspended by a suspending member which contains a gimbal spring and a spring arm and is secured to a rigid supporting member at the end opposite to the end where the head is mounted. The suspending member keeps the head at a predetermined flying height, such as 0.2 µm, over the surface of a rotating disk by balancing against the aerodynamic lift produced by the slider. New information is written in a data region on the disk and the information stored in data bits is read through the transducer at the magnetic gap between the transducer and the disk. The supporting arms are stacked tightly around a spindle forming one head block. The spindle is supported by a supporting means, such as ball bearings, so as to be rotatable around the axis of the spindle and to be driven by a voice coil motor (VCM) attached to the head block under the control of access signals sent from the central computer. The head block is rotated clockwisely or anti-clockwisely around the axis of the spindle such that the data-heads are transferred along an arc orbit running approximately in a radial direction of the disk, approximately perpendicularly traversing each track formed on the disk surface. During the accessing operation, the track address signals and the track error signals are read by the servo-head and fed back to an access control circuit to form a closed feed back control system. Thus the data heads access a track of a disk under the control of access signals. The above-described mechanism enabling the data heads to access a specified track is a well-known one and referred to as a swinging head positioner. While, there is a head positioner of another type which is movable along a straight line running in a radial direction of the disk. This is referred to as a linear head positioner, having a carriage on which a head block is mounted. Thereby, the heads can traverse the tracks exactly perpendicularly.

Requirements for high speed read/write operation, high recording density and high reliability, result in configurational precision of high degree accompanied with various problems to be solved. One of them is erroneous operation of the servo-system of the disk device during a write operation, being induced by an electro-magnetic noise caused by the transducer of a data-head adjacent to the servo-head. The transducer includes a small coil. During a write operation of a data-head, data signals in a series of pulse trains sent from the central computer, are applied to the coil to actuate the data-head to produce data bits on the relevant track. The pulse signals induce magnetic leakage flux emanated from the coil. The frequency of the noise ranges from low to high frequency such as from 1.5 to 2 MHz. If a servo-head is placed extremely near the data-head, the leakage flux causes noise in the servo-head, adversely affecting the servo-operation of the disk storage device. Such a positional configuration of a pair of a data-head and a servo-head frequently occurs in a recent magnetic storage device.

Generally, in a recent disk assembly, both sides of each disk are utilized as storage medium, and two magnetic heads are placed in a space between two adjacent disks, in opposite directions facing to the respective disk surfaces and respectively engaging therewith. Such spaces are formed between the adjacent paired disks, and the pairs of the heads are inserted in these spaces by the aid of a mechanism of a head positioner. In such a configuration, the servo-head is desirable to be placed in a spaced located at the middle of the spaces of the disk assembly. The reason is as follows: the actual axis of rotation of the disk assembly tends to be subject to a slight inclination off the ideal position due to an unavoidable tolerance of relevant supporting structure for supporting and rotating the spindle. If the servo-head is placed in the center space, the off-track of the data-heads which are placed near the end portions of the stacked disk assembly is minimized because the disk assembly is positioned with no off-track at the center portion of the disk assembly by the function of the servo-head. As the result, in a recent disk assembly, a servo-head is always placed near a data-head, being subject to noise from the data-head. In view of the above-described noise, this configuration is not desirable.

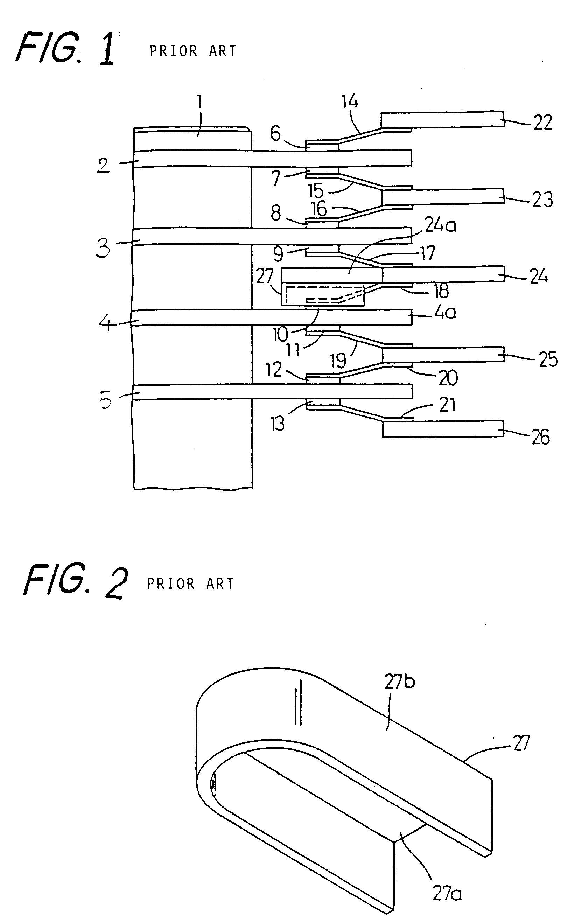

A prior art technology to reduce the adverse effect of the noise, will be described. A magnetic disk assembly having a servo-head surrounded by a shield cap for electro-magnetically shielding a servo-head from the noise, is disclosed in an unexamined published Japanese Patent Application, serial number 60-136024, published on July 19, 1985, proposed by Matsumoto. The shield cap is attached to the associated supporting arm to support the servo-head, and the structure thereof is described with reference to Fig.s 1 to 3 as follows: Fig.1 is a schematic side view for illustrating the arrangement of disks 2 to 5 stacked co-axially around a rotatable spindle 1, and magnetic heads 6 to 13 mounted respectively on the tips of suspending members 14 to 21 including gimbal springs and spring arms which are fixed to supporting arms 22 to 26. As seen from the figure, all the heads are arranged such that the heads are located on the same cylinder, namely a virtual cylindrical plane being co-axial with the spindle 1. Although is not shown in the figure, these supporting arms 22 to 26 are stacked in the recited order to form a head assembly of a swinging head positioner. Among the heads, only the head 10 is a servo-head, and the other heads are data-heads. The both surfaces of the disks 2 to 5 are utilized as data regions except for a part of the upper surface 4a of the disk 4 which forms the middle space in combination with the disk 4. Servo information is previously stored in a servo region on the part of the surface 4a. Each head faces each surface of the relevant disk, and engage with the magnetic medium coated on the surface for read/write operation and servo operation during which the disk assembly is rotated at a fixed speed, providing the heads with a predetermined flying height. As shown in Fig.1, the servo-head 10 and the data-head 9 are arranged in the same cylinder and in back-to-back state. The servo- head 10 is easily subject to noise caused by the data-head 9 during a write operation of the data head 9. In order to reduce the undesirable effect of the noise, a shield cap 27 of magnetic material, is disposed on a tip portion 24a extended from the supporting arm 24.

Fig.2 is a perspective view of the shield cap 27 having a top wall 27a and a U-shaped side wall 27b, enclosing a space thereinside in which the servo-head 10 is to be accommodated. Thus, the servo-head 10 is shielded electro-magnetically from noise induced by the data-head 9 during its write operation. However, addition of the shield cap 27 and the extended portion 24a of the supporting arm 24, results in adverse effects such as increase in the total weight and the inertia of moment around the axis of the spindle 1 of the moving members, namely the relevant head assembly. As the result, various serious disadvantages such as increase in the access time and erroneous head positioning. In addition, an undesirable mechanical resonance of the servo-head 24 during an access operation tends to occur.

Another shielding means is disclosed in an unexamined Japanese Patent Application, serial number 60-140524, published on July 25, 1985, proposed by Seki. A shield plate is fixed to a supporting arm, extending on a plane on which the supporting arm lies, and interposing between a data-head and a servo-head both of which are fixed to the supporting arm in parallel with each other and extend in the longitudinal direction of the supporting arm. By this configuration, the servo-head is shielded from noise caused by the data-head. However, the increase in the weight of movable members of the head assembly will cause a disadvantage similar to that of the previously described device of Matsumoto.

In order to overcome the problem of this kind, a shield plate of different type is disclosed in an unexamined Japanese Patent Application, serial number 58-17515, published on February 1st, 1983, proposed by Sengoku. The shield plate is secured to a base portion of the relevant housing of the device, not to a moving member. Hereby, a servo-head is disposed facing the bottom surface of the bottom disk, which is the case with a magnetic disk device of rather low storage density. In a normal state, the servo-head is shielded from the noise caused by the other data-heads, requiring no shield means. This is because substrates of disks are usually made of aluminum, having a high electrical conductivity, serving to shield the servo-head from the noise, particularly the noise of high frequency. However, when the heads are accessed to tracks near the peripheral edge of the disks, noise produced by the data-head which engages with the opposite upper surface of the bottom disk, will come around the edge of the bottom disk adversely affecting the servo-head. The shield plate of Sengoku is secured to a base portion of the relevant housing for accommodating the relevant disk assembly and head positioner, having a horizontal shield wall disposed in the same plane of the bottom disk to which a servo-head engages. The shield wall has an edge having a shape of concaved arc and closely facing the disk edge spacing with a small gap from each other. The shield plate is made of magnetic material or electrically conductive material. Thus, the magnetic leakage flux from the data-head engaging with the upper surface of the bottom disk is cut by the shield plate, and the undesirable disturbance to the servo-head is reduced. Hereby, it is obvious that there is no increase in the weight and the moment of inertia of the head positioner. However, the use of the shield plate is limited to the situation where a servo-head engages alone to a surface of a disk in a space formed between two disks which face each other. This is a disadvantage of the shield plate of Sengoku.

For a long period, an improved shield means for shielding a servo-head overcoming the above disadvantages has been expected in the art.

JP-A-61105783 discloses a magnetic disk system comprised of a magnetic disk positioner for supporting and selectively positioning a magnetic servo-head and a magnetic data-head with respect to a plurality of a rotatable magnetic disk stacked co-axially and spaced in parallel from each other, said servo-head and said data-head are arranged in back-to-back state in a space between two of said magnetic disks adjacent and parallel to each other. Further, a shield member made of magnetic and/or electrically conductive material and fixed to the magnetic disk positioner is interposed between said servo-head and said data-head.

JP-A-5817515 discloses a magnetic disk device comprising a magnetic disk, a data-head and a servo-head. Between the servo-head and the data-head, a disk shield made of a conductor or magnetic material is fitted in the same plan with the magnetic disk and adjacently to the outermost circumferential edge of the magnetic disk.

IBM technical disclosure bulletin, Vol. 19, No. 4, 4 September 1976, pages 1437-1438, discloses an actuator mechanism for a disk file. The actuator disk consists of an arm mounted for rotational motion about a pivot. A record/playback head is supported at one end of the arm and a voice coil cooperating with a fixed E-shaped permanent magnetic stator is supported on a former at the other end of the arm. By energising the voice coil with drive currents of appropriate magnitude and polarity, the head can be moved from one track to another over a rotating disk surface in order to perform transducing operations thereon. Further, a shield is supported extending over the disk surface in the vicinity of the head.

### SUMMARY OF THE INVENTION

It is, therefore, an object of the present invention to provide a magnetic disk storage device having a swinging magnetic head positioner with an improved electro-magnetic shielding structure for shielding a servo-head thereof from noise produced by an adjacent data-head.

It is another object of the present invention to provide a shielding structure for a servo-head secured to a base member of the device, resulting in no increase in the weight and inertia moment of the associated moving member.

Still another object of the present invention is to provide the above shielding structure with simple and compact configuration in combination with the relevant magnetic head suspension structure.

The above objects are achieved by a shield plate which is interposed between a servo-head and the relevant adjacent data-head, and is secured to a base portion of a housing of the device. Hereby, the longitudinal axis of a suspension member of the servo-head is mostly desirable to be aligned with the line connecting the center of the servo-head and the center of rotation of the relevant head block assembly, that is, the suspension member is desirable to be of 'straight type'.

These and other advantages and novel features of the invention will become apparent from the following detailed description of the invention taken in conjunction with the accompanying drawings where like reference numerals denote like parts respectively.

### BRIEF DESCRIPTION OF DRAWINGS

Fig.1 is a schematic side view of a prior art magnetic disk assembly illustrating relating structure between magnetic disks and relevant magnetic heads;
Fig.2 is a perspective view of a prior art magnetic disk assembly illustrating a shield cap for a servo-head;
Fig.3 is a schematic perspective view of a prior art magnetic disk assembly illustrating the shield cap shown in Fig.2;
Fig.4 is a plan view of a supporting member of a magnetic head illustrating configuration of a first type, namely a straight type;
Fig.5 is a plan view of a supporting member of a magnetic head illustrating configuration of a second type, namely a dog-leg type;
Fig.6 is a plan view of a magnetic disk storage device of a first embodiment illustrating the arrangement of a magnetic disk assembly and a swinging head positioner;
Fig.7 is a perspective view of a magnetic disk storage device of the preceding figure;
Fig.8 is a schematic cross-sectional side view of the fist embodiment illustrating the arrangement of the disk assembly, magnetic heads and a shield plate;
Fig.9 is a schematic plan view of a second embodiment illustrating the arrangement of a disk assembly, magnetic heads and a shield plate;
Fig.10 is a schematic cross-sectional side view of the second embodiment taken along a dotted line A-A of Fig.9;
Fig.11 is a schematic plan view of a modified first embodiment illustrating the arrangement of the disk assembly, magnetic heads and a shield plate;
Fig.12 is a schematic plan view of a third embodiment illustrating the arrangement of a disk assembly, magnetic heads and a shield plate; and
Fig.13 is a schematic cross-sectional side view of the second embodiment taken along a dotted line B-B of Fig.11.

### DETAILED DESCRIPTION OF PREFERRED EMBODIMENTS

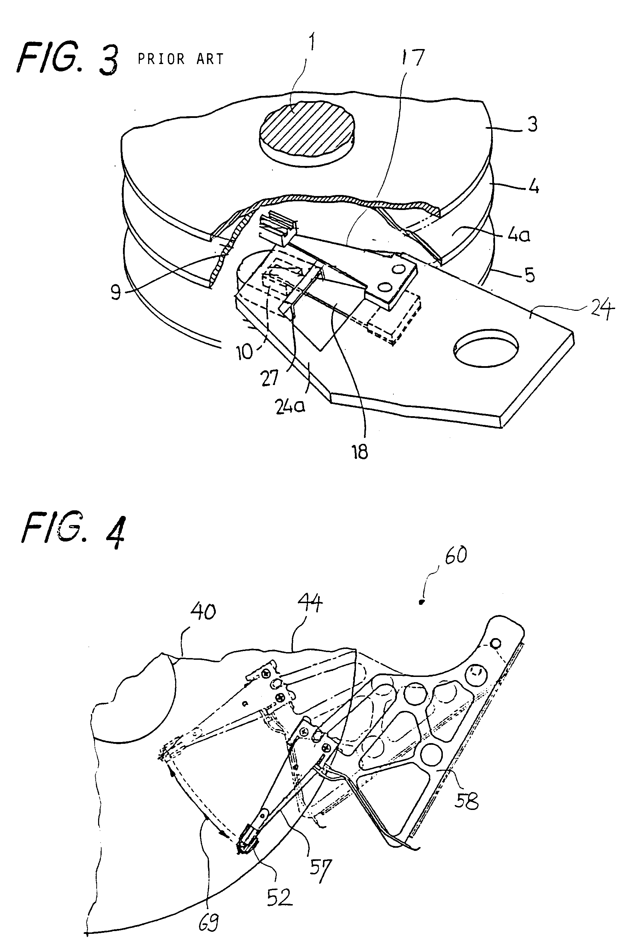

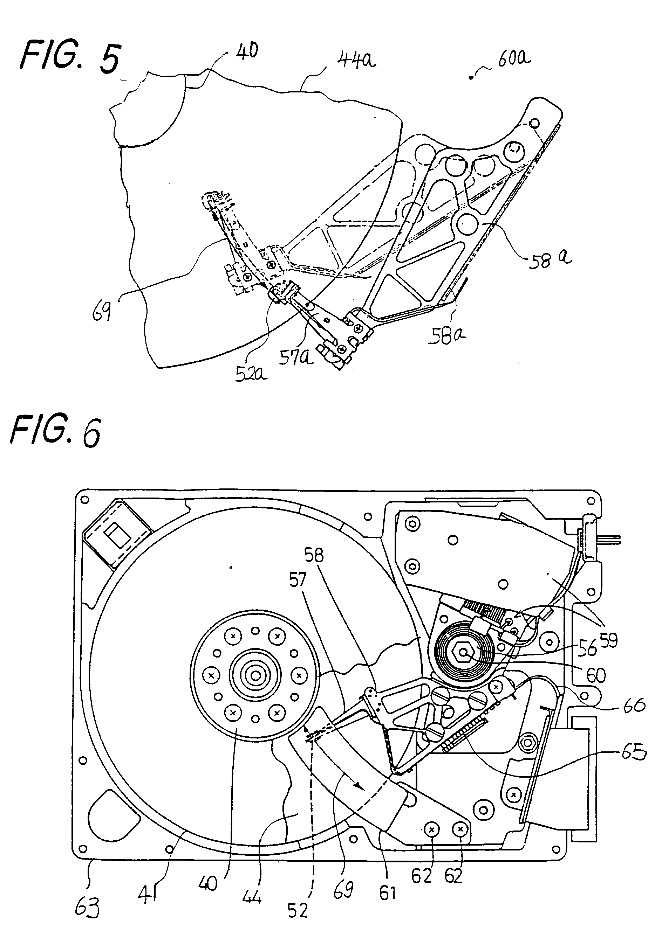

Before proceeding further, with respect to a swinging magnetic head positioner rotatable around an axis, two types of structure of supporting member for a magnetic head will be described with reference to plan views of Fig.4 and Fig.5. The structures are well known, and described, for example, in the United States Patent, serial Patent Number: 4,620,251, issued on October 28, 1986, to Gitzendanner. The one is shown in Fig.4 and the other is shown in Fig.5. The supporting member of Fig.4 for supporting a magnetic head 52, comprises a suspension member 57 composed of a gimbal spring (hereinafter gimbal) and a spring arm, and a supporting arm 58 (hereinafter arm) rotatable around an axis 60 which is represented by a point. Consequently, the magnetic head 52 is transferred along an arc 69 circulating around the center 60. The same of Fig.5 also comprises corresponding elements denoted by reference numerals similar to those of Fig.4 attached by a suffix 'a'. The difference between both supporting members, lies in the direction of the longitudinal axis of the suspending member 57 or 57a. The direction of longitudinal axis of the suspension member 57 is approximately aligned with the straight line running from the axis of rotation 60 to the center of the head 52. In other words, the direction is approximately coincide with the tangential direction of the engaging track of the disk 44. In contrast, in the supporting member of Fig.5, the longitudinal axis of the suspension member 57a is approximately aligned with a radial direction of the disk 44a. The former might be referred to as 'straight type' and the latter as 'dog-leg type'. The complicated shape of the arms 58 and 58a will be explained later.

In the following, three embodiments from the first to the third, and a modified first embodiment will be disclosed. Each of embodiments has each own suspension member of different type for suspending each magnetic head. The structure or shape of the subject shield plate varies depending on the respective type of the suspension member.

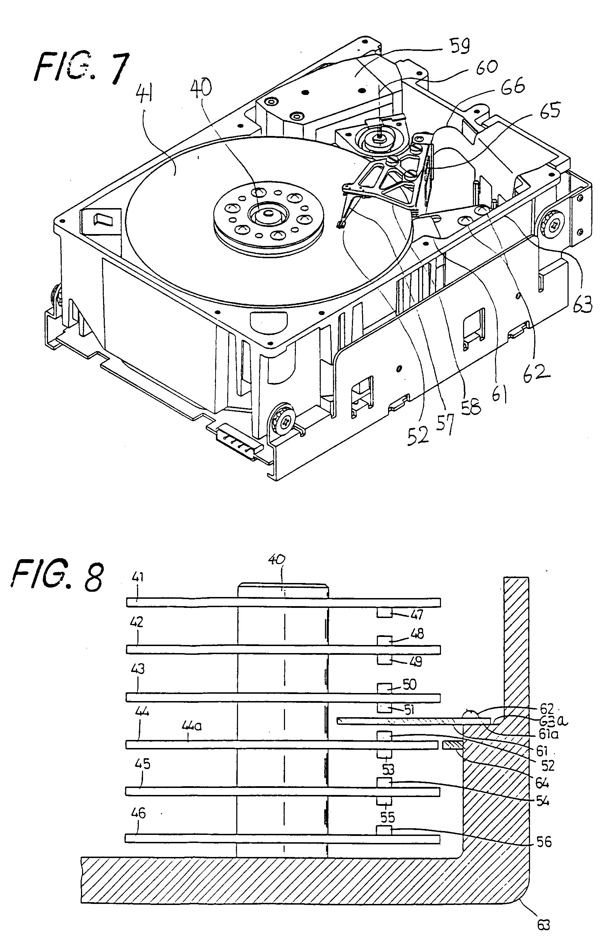

Fig.6 and Fig.7 are respectively a plan view and a perspective view of the first embodiment. Fig.8 is a schematic cross-sectional view of the device of Fig.6. The plan view of Fig.6 is partially broken to show a shield plate 61 for shielding a servo-head 52. Six slices of disks 41 to 46 are stacked co-axially around a rotatable spindle 40, and magnetic heads 47 to 53 are mounted respectively on the tips of suspension members 57 which are fixed respectively on supporting arms 58 at the ends opposite to the mounted heads. An integrated circuit semiconductor device (IC) 65 and relevant flexible printing circuit 66 are mounted on a side surface of the head block for receiving and sending signals between the relevant magnetic heads and a central computer (not shown). In order to connect the magnetic heads to the IC devices, the connecting wirings therebetween are required to be as short as possible resulting in a complicated shape of the supporting arm 58.

As clearly seen from Fig.6 and Fig.7, the longitudinal axis of the suspension member 57 is directed approximately in alignment with the straight line running from the rotation axis 60 to the center of the head 52. The supporting members of the magnetic heads having such a configuration are referred to as 'straight type'. All the heads are located on the same cylinder. Although is not shown in the figure, a motor drives the spindle 40 to rotate the disks at a fixed speed. While, the arms 58 are stacked around a rotatably supported spindle 56 to form a head block or head assembly which is driven by a voice coil motor 59 attached to the head block. Among the heads, the head 52 only is a servo-head, and the other heads are data-heads. The both top and bottom surfaces of disks 42 to 45, the bottom surface of the top disk 41, and the top surface of the bottom disk 46, are utilized as data regions except for a part of the upper surface 44a of the disk 44 which is utilized as a servo region. Servo information is previously stored on the servo region on the surface 44a. Each head faces the surface of each disk, and engage with the magnetic medium coated on the surface for read/write operation or servo operation during which the disk assembly is rotated at a fixed speed providing the heads with a predetermined flying height.

As shown in Fig.8, the servo-head 52 is arranged in back-to-back state extremely near the data-head 51, being easily subject to noise caused by the data-head 51 during its write operation. Hereby, a shield plate 61 made of magnetic material, such as ferrite, Permalloy, (iron-nickel alloy) or a magnetic stainless steel, is interposed between the servo-head 52 and the data-head 51 to cut the path of magnetic leakage flux emanating from the data-head 51 during its write operation in order to reduce the undesirable effect of the noise. The shield plate 61 is screwed at its end portion 61a on a stepped portion 63a formed on the inner surface of a side wall of the base housing 63 with screws 62. The opposite end 61b of the shield plate 61 is extended in the vicinity of the spindle 1. For reference, the related dimensions of the device are disclosed. The disk has a diameter of 5 inches, comprising an aluminum substrate of 1.27 mm thick. The distance between the disk 43 and 44 is 6 mm, and the other distances between two disks are 4.5 mm. The thickness of the shield plate 61 is 1.0 mm, and the width is 20 mm, having two side edges shaped in arcs drawn around the center 60 with radii equal to the distances between the center 60 and the respective side edges. As described before, the suspension members of the first embodiment is of 'straight type', having a longitudinal axis running along a straight line that passes the center point 60. Consequently, seeing from the top side of the disk assembly, the servo-head 52 runs along a center line of the shield plate 61 as the swinging head positioner swings around the axis 60 of its spindle. It is assured that the width of the shield plate 61 is sufficient to cover and shield the servo-head 52. Further shielding effect is provided by another shielding plate 64 which has a concave arc shaped edge facing the edge of the disk 44 with a small gap, being disposed in a plane of the disk 44 and being secured to the inner surface of the side wall of the base portion. The shield plate 64 shields the servo-head 52 from the noise issued from the data-head 53 and 54 engaging with the disk surfaces of disks 44 and 45 respectively when the magnetic heads access tracks formed near the peripheral edges of the disks 44 and 45. The material and the thickness of the shield plate 64 is the same as those of the shield plate 61.

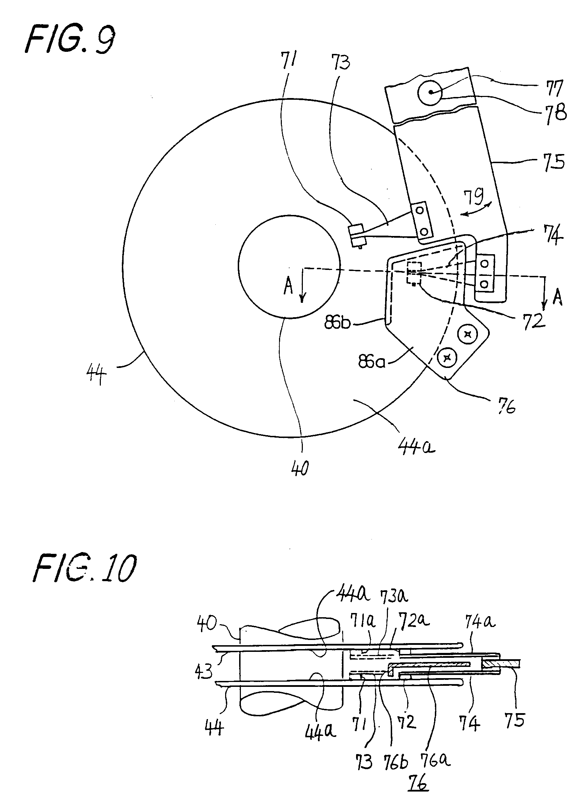

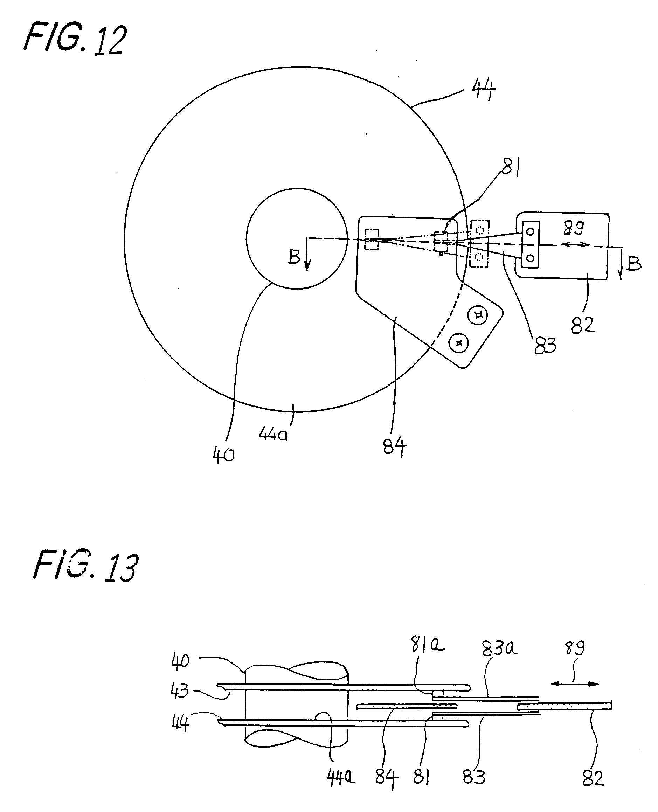

The above-described shielding structure of the shield plate 61 is also applicable to a magnetic disk storage device having a swinging head positioner including suspension members of the second type (dog-leg type) and the same device having a linear head positioner. The former is the second embodiment and the latter is the third embodiment. Plan views of the second embodiment and the third embodiment are schematically illustrated in Fig.9 and Fig.12 respectively.

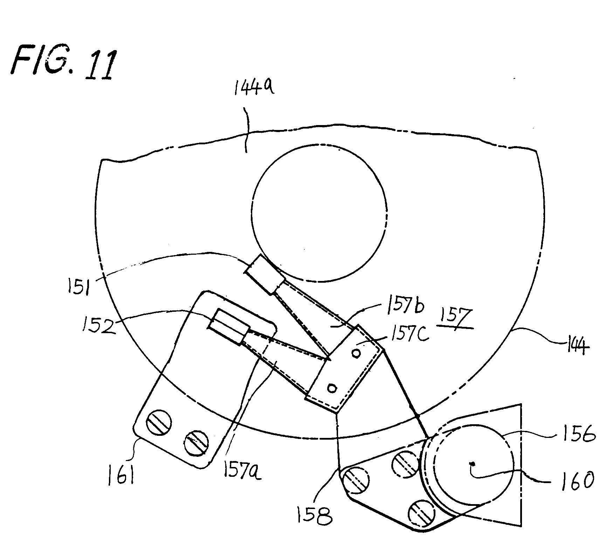

Fig.10 and Fig.13 are cross-sectional side views taken along dotted lines A-A of Fig.9 and B-B of Fig.12. The disk assembly are assumed to be the same as that of the first embodiment.

With respect to the second embodiment, a supporting arm 75 can swing as indicated by a both-heads arrow 79 around an axis 77 of a spindle 78. Inner-heads 71 and 71a are arranged in a back-to-back state engaging with the surfaces of disks 44 and 43, and outer-heads 72 and 72a are arranged in the similar manner. Consequently, there are four heads in the space between the disks 43 and 44. The heads 71, 71a, 72, and 72a are fixed on the tips of suspension members 73, 73a, 74 and 74a respectively, and engage with the surface 44a of the disk 44 and the surface 43a of the disk 43. Only the head 72 acts as a servo-head, and other heads as data-heads. The longitudinal axis of the suspension members 73, 73a, 74, and 74a are directed in radial directions of the disks, being fixed commonly to a supporting arm 75 at different portions of the arm 75 such that the inner-head 71, 71a and the outer-heads 72, 72a can traverse over different half tracks on the disk surface 44a and 43a. As the result, the transferring length of the heads are halved. A servo region is formed on an outer half portion of the disk surface 44a. A shield plate 76 is secured to an inner wall of a housing 63 (not shown), being interposed in a space between the back side surfaces of the heads 71 and 72, and 71a and 72a without contact with the above four heads. The shield plate 76 has a horizontal top wall 76a lying in a plane of the supporting arm 75, extending upwardly in the figure, and covering the whole transferring path of the servo-head 72. The shield plate 76 has also a shallow downwardly flanged side wall 76b as shown in Fig.9 slightly interposing between the heads 71 and 72. With such a configuration, the servo-head 72 is effectively shielded from noise produced by the data-heads 71, 71a, and 72a, resulting in the elimination or reduction of the erroneous servo operation of the relevant swinging head positioner. The material and the thickness of the shield plate 76 may be the same of that of the shield plate 61 of the first embodiment. The shape of the shield plate 76 may be selected freely to achieve a good shielding effect. In addition, there results in no increase in the total weight and inertia of moment around the spindle axis 77 of the moving members of the head positioner. Thus, the disk storage device maintain high speed operation and a reliable servo operation.

Hereby, the halved transferring length of the heads provides the device with substantial advantage that the length of the relevant suspension member in a longitudinal direction is decreased. Otherwise, problems such as an undesirable mechanical resonance oscillation might occur due to enhanced length of the suspension member. In addition, the accessing time of the relevant magnetic head positioner is substantially decreased to half, providing the magnetic storage device with a doubled high speed operation. It is obvious that the number of magnetic heads in the above-described arrangement is not limited within two, but can be extended to three or four, for instance, as much as the design of the device allows.

Furthermore, the structure of the supporting member mounting two magnetic heads can be simplified. In Fig.11, as one of examples, there is illustrated a schematic plan view of a magnetic disk storage device of a modified type of the first embodiment, wherein a magnetic head positioner thereof is a swinging type swinging around an axis 160 of a spindle 156. The suspension member 157 is composed of gimbal springs (not shown) and spring arms 157a, 157b, and is of 'straight type'. The spring arm 157a has a base portion 157c, the end of which is fixed to a rigid supporting arm 158 by welding or screws. Two branches 157a and 157b are extended from the base portion 157c, and at the tip of the branches 157a and 157b, a servo-head 152 and a data-head 151 are respectively mounted through each gimbal spring (not shown). The spring arm 157 is punched out from a thin plate made of resilient metal such as stainless steel. The servo-head 152 is arranged over an outer portion of the magnetic disk 144 engaging therewith. With above configuration of the swinging magnetic head positioner, the distance of transfer of the heads, an access stroke, can be halved in comparison with that of a single head structure. Two data-heads mounted on another suspension member similar to the suspension member 157 are arranged in a back-to-back state with respect to the servo-head 152 and the data-head 151.

The servo-head 152 is shielded from other three data-heads disposed in the same space, by a shield plate 161 being interposed between the two pairs of two magnetic heads and being secured to a stepped portion of a housing (not shown). Since the servo-head 152 is disposed on the outer side, or the servo region on the magnetic disk 144 formed on the outer half portion of the surface 144a of the disk 144, the radial length of the shield plate 161 is approximately halved in comparison with the shield plate 61 of the first embodiment. The shield plate 161 has a downwardly flanged portion 161b to shield the noise coming from the data-head 151.
The other structures of the modified first embodiment is the same as those of the first embodiment.

A magnetic disk storage device of the third embodiment is described with reference to Fig.s 12 and 13. The third embodiment has a linear type head positioner where a supporting arm 82 is transferred forwardly and backwardly along a straight line as indicated by a both-heads arrow 89. Magnetic heads 81 and 81a are arranged in a back-to-back state respectively engaging the surfaces of disks 43 and 44. These heads 81 and 81a are fixed on the tips of suspension members 83 and 83a respectively, and engage with the surface 44a of the disk 44 and the surface 43a of the disk 43. Only the head 83 acts as a servo-head, and other heads as data-heads. The longitudinal axis of the suspension members 83 and 83a are directed in radial directions of the disks, being fixed commonly to a supporting arm 82. The supporting arm 83 and other arms are stacked with other similar supporting arms (not shown) to form a head block which are mounted on a carriage (not shown) and transferred linearly as described above. Servo regions are formed on the disk surface 44a, and data regions are formed on other disk surfaces. A shield plate 84 is secured to an inner wall of a housing 63 (not shown), interposing in a space between the back side surfaces of the heads 81 and 81a without contact with the above two heads. The shield plate 84 extends upwardly in the figure, covering the whole transferring path of the servo-head 81. With such a configuration, the servo-head 81 is effectively shielded from noise produced by the data-head 81a, resulting in the elimination or reduction of the erroneous servo operation of the relevant linear head positioner. The material and the thickness of the shield plate 84 may be the same of that of the shield plate 61 of the first embodiment. The shape of the shield plate 84 may be selected freely to achieve a good shielding effect. In addition, there results no increase in the total weight of the linear head positioner. Thus, the disk storage device of the third embodiment maintains high speed operation and reliable servo operation. However, with a conventional linear head positioner, enhancement of the length of the relevant suspension in a longitudinal direction in comparison with the preceding embodiments might be necessary.

## Claims

1. A magnetic disk storage device comprising a housing (63) including
a base portion therein, and a magnetic disk positioner (57, 58, 73-75; 82, 83; 157, 158) for supporting and selectively positioning a magnetic servo-head (52) and a magnetic data-head (51) with respect to a plurality of rotatable magnetic disks (43,44) stacked co-axially and spaced in parallel from each other wherein said servo-head (52) and said data-head (51) are arranged in back-to-back state in a space between two of said magnetic disks (43,44) adjacent to each other, and
a shield member (61; 76; 84; 161) made of magnetic and/or electrically conductive material interposing between said magnetic data-head (51) and said magnetic servo-head (52);
characterized in that
said shield member is secured to said base portion of said housing (63), interposed between a magnetic servo-head and an adjacent magnetic data-head, so that said magnetic servo-head (52) and said magnetic data-head (51) are always shielded electro-magnetically from each other during a transferring movement of said magnetic servo-head (52) and said magnetic data head (51) for positioning said magnetic data-head (51) and said magnetic servo-head (52) with respect to said magnetic disks (43,44).

2. A magnetic disk storage device of claim 1, characterized in that said magnetic material is selected from ferrite, permalloy (iron-nickel alloy), and magnetic stainless steel.

3. A magnetic disk storage device of claim 1 or 2, characterized in that said magnetic head positioner (57, 58) is of a swinging type by which said magnetic servo-head (52) and said magnetic data-head (51) are transferred along an arc-shaped orbit (69).

4. A magnetic disk storage device of claim 3, characterized in that said magnetic head positioner (57, 58) of swinging type has a supporting member comprising a suspension member (57) flexibly suspending said magnetic servo-head (52) and/or said magnetic data-head (51) at a first end of said suspension member (57), and a rigid supporting arm (58) being fixed to an edge portion of said suspension member (57) at a second end of said suspension member (57) opposite to said first end, whereby the longitudinal axis of said suspension member is directed in line with a straight line running from the center of said servo-head (52) or said data-head (51) to an axis of rotation (60) of said magnetic head positioner (57, 58) of swinging type.

5. A magnetic disk storage device of claim 1 or 2, characterized in that said magnetic head positioner (82, 83) is of a linear type by which said magnetic servo-head (52) and said magnetic data-head (51) are transferred along a straight line (89).

6. A magnetic disk storage device of claim 5, characterized in that said magnetic head positioner (82, 83) of linear type has a supporting member comprising a suspension member (83) for flexibly suspending said magnetic servo-head (81) and said magnetic data-head (81a) at a first end of said suspension member, and a rigid supporting arm (82) being fixed to an edge portion of said suspension member (83) at a second end of said suspension member (83) opposite to said first end, whereby the longitudinal axis of said suspension member (83) is in the radial direction of said magnetic disk (43, 44).

7. A magnetic disk storage device of any one of claims 1 to 6, characterized in that n pieces of magnetic heads (47-56) including said magnetic data-head and said servo-head are disposed respectively on n pieces of cylinders each having a different radius from others with a fixed radial pitch, whereby said cylinder is defined as a virtual cylindrical plane commonly having an axis with the axis of rotation of said magnetic disk, and n denotes an integer.

8. A magnetic disk storage device of claim 7, characterized in that said integer n is equal to 2.

9. A magnetic disk storage device of claim 8, characterized in that said suspension member includes a spring member (157, 158) having a base portion (158) and two branches (157a, 157b) extended from said base portion (158), said branches flexibly support two pieces of said magnetic heads (151, 152) at respective tips thereof through respective gimbal springs, whereby said spring member (157, 158) is a one-piece member made of a thin plate of resilient material.

## Patentansprüche

1. Magnetplatten-Speichervorrichtung umfassend ein Gehäuse (63) mit
einem Basisabschnitt und einem Magnetplatten-Positionierer (57, 58, 73-75; 82, 83; 157, 158), der einen Magnetservokopf (52) und einen Magnetdatenkopf (51) trägt und selektiv positioniert bezüglich mehrerer drehbarer, koaxial übereinander und parallel zueinander, durch einen Abstand voneinander getrennt angeordneter Magnetplatten (43, 44), wobei der Servokopf (52) und der Datenkopf (51) zwischen zwei benachbarten der Magnetplatten (43, 44) mit den Rückseiten zueinander angeordnet sind, und
eine aus einem magnetischen und/oder einem elektrisch leitfähigen Material hergestellte Abschirmung (61; 76; 84; 161), die zwischen dem Magnetdatenkopf (51) und dem Magnetservokopf (52) liegt,
dadurch gekennzeichnet, daß
die Abschirmung an dem Basisabschnitt des Gehäuses (63) befestigt ist und zwischen einem Magnetservokopf und einem benachbarten Magnetdatenkopf liegt, so daß während einer Versatzbewegung des Magnetservokopfs (52) und des Magnetdatenkopfs (51) zu deren Positionierung diese bezüglich der Magnetplatten (43, 44) ständig elektromagnetisch voneinander abgeschirmt sind.

2. Magnetplatten-Speichervorrichtung nach Anspruch 1, dadurch gekennzeichnet, daß das magnetische Material Ferrit, Permalloy (Eisen-Nickel Legierung) oder rostfreier magnetischer Stahl ist.

3. Magnetplatten-Speichervorrrichtung nach Anspruch 1 oder 2, dadurch gekennzeichnet, daß der Magnetkopf-Positionierer (57, 58) schwenkbar ist, wodurch der Magnetservokopf (52) und der Magnetdatenkopf (51) entlang einer bogenförmigen Bahn (69) bewegt werden.

4. Magnetplatten-Speichervorrichtung nach Anspruch 3, dadurch gekennzeichnet, daß der schwenkbare Magnetkopf-Positionierer (57, 58) ein Trageteil aufweist mit einer Aufhängung (57), an der der Magnetservokopf (52) und/oder der Magnetdatenkopf (51) an einem ersten Ende der Aufhängung (57) flexibel aufgehängt sind, und mit einem starren Tragearm (58), der an einem Randabschnitt der Aufhängung (57) an einem dem ersten Ende gegenüberliegenden zweiten Ende der Aufhängung (57) befestigt ist, wobei die Richtung der Längsachse der Aufhängung mit einer geraden Linie übereinstimmt, die vom Mittelpunkt des Servokopfs (52) oder des Datenkopfs (51) zu einer Rotationsachse (60) des schwenkbaren Magnetkopf-Positionierers (57, 58) verläuft.

5. Magnetplatten-Speichervorrichtung nach Anspruch 1 oder 2, dadurch gekennzeichnet, daß der Magnetkopf-Positionierer (82, 83) ein Linear-Typ ist, wodurch der Magnetservokopf (52) und der Magnetdatenkopf (51) entlang einer geraden Linie (89) bewegt werden.

6. Magnetplatten-Speichervorrichtung nach Anspruch 5, dadurch gekennzeichnet daß der Linear-Typ Magnetkopf-Positionierer (82, 83) ein Trageteil aufweist mit einer Aufhängung (83) zur flexiblen Aufhängung des Magnetservokopfs (81) und des Magnetdatenkopfs (81a) an einem ersten Ende der Aufhängung, und mit einem starren Tragearm (82), der an einem Randabschnitt der Aufhängung (83) an einem dem ersten Ende gegenüberliegenden zweiten Ende der Aufhängung (83) befestigt ist, wodurch die Längsachse der Aufhängung (83) in die radiale Richtung der Magnetplatte (43, 44) zeigt.

7. Magnetplatten-Speichervorrichtung nach einem der Ansprüche 1 bis 6, dadurch gekennzeichnet, daß n Magnetköpfe (47-56), die den Magnetdatenkopf und den Magnetservokopf umfassen, entsprechend auf n Zylindern angeordnet sind, wobei jeder einen unterschiedlichen Radius gegenüber den anderen mit einem festen radialen Abstand aufweist, wobei der Zylinder als eine virtuelle Zylinderebene definiert ist, deren eine Achse mit der Rotationsachse der Magnetplatte zusammenfällt, und wobei n eine ganze Zahl ist.

8. Magnetplatten-Speichervorrichtung nach Anspruch 7, dadurch gekennzeichnet, daß die ganze Zahl n 2 ist.

9. Magnetplatten-Speichervorrichtung nach Anspruch 8, dadurch gekennzeichnet, daß die Aufhängung eine Feder (157, 158) umfaßt mit einem Basisabschnitt (158) und zwei sich vom Basisabschnitt erstreckenden Zweigen (157a, 157b), wobei die Zweige zwei Magnetköpfe (151, 152) an ihren jeweiligen Enden flexibel mittels entsprechenden Kardanfedern stützen, wobei die Feder (157, 158) einstückig und aus einer dünnen Platte eines elastischen Materials gefertigt ist.

## Revendications

1. Un dispositif d'enregistrement à disques magnétiques comprenant un boîtier (63) qui comporte une partie de base, et un dispositif de positionnement de disques magnétiques (57, 58, 73-75; 82, 83; 157, 158) qui est destiné à supporter et à positionner sélectivement une tête magnétique d'asservissement (52) et une tête magnétique de données (51), par rapport à un ensemble de disques magnétiques tournants (43, 44) qui sont empilés de manière coaxiale et sont mutuellement espacés dans des orientations parallèles, dans lequel la tête d'asservissement (52) et la tête de données (51) sont disposées dans une configuration dos à dos dans un espace compris entre deux des disques magnétiques (43, 44) mutuellement adjacents, et
un élément de blindage (61; 76; 84; 161) constitué par un matériau magnétique et/ou conducteur de l'électricité, interposé entre la tête magnétique de données (51) et la tête magnétique d'asservissement (52);
caractérisé en ce que
l'élément de blindage est fixé à la partie de base du boîtier (63), en étant intercalé entre une tête magnétique d'asservissement et une tête magnétique de données adjacente, de façon que la tête magnétique d'asservissement (52) et la tête magnétique de données (51) soient toujours mutuellement isolées par un blindage électromagnétique pendant un mouvement de transfert de la tête magnétique d'asservissement (52) et de la tête magnétique de données (51), pour positionner la tête magnétique de données (51) et la tête magnétique magnétique d'asservissement (52) par rapport aux disques magnétiques (43, 44).

2. Un dispositif d'enregistrement à disques magnétiques selon la revendication 1, caractérisé en ce que le matériau magnétique est sélectionné parmi le ferrite, le Permalloy (alliage fer-nickel) et l'acier inoxydable magnétique.

3. Un dispositif d'enregistrement à disques magnétiques selon la revendication 1 ou 2, caractérisé en ce que le dispositif de positionnement de têtes magnétiques (57, 58) est d'un type pivotant au moyen duquel la tête magnétique d'asservissement (52) et la tête magnétique de données (51) sont transférées le long d'une orbite en forme d'arc (69).

4. Un dispositif d'enregistrement à disques magnétiques selon la revendication 3, caractérisé en ce que le dispositif de positionnement de têtes magnétiques (57, 58) du type pivotant comporte un organe de support comprenant un organe de suspension (57) qui suspend de façon flexible la tête magnétique d'asservissement (52) et/ou la tête magnétique de données (51) à une première extrémité de cet organe de suspension (57), et un bras de support rigide (58) qui est fixé à une partie de bord de l'organe de suspension (57), à une seconde extrémité de l'organe de suspension (57) opposée à la première extrémité, grâce à quoi l'axe longitudinal de l'organe de suspension est aligné avec une ligne droite qui s'étend à partir du centre de la tête d'asservissement (52) ou de la tête de données (51), jusqu'à un axe de rotation (60) du dispositif de positionnement de têtes magnétiques (57, 58) du type pivotant.

5. Un dispositif d'enregistrement à disques magnétiques selon la revendication 1 ou 2, caractérisé en ce que le dispositif de positionnement de têtes magnétiques (82, 83) est d'un type linéaire au moyen duquel la tête magnétique d'asservissement (51) et la tête magnétique de données (51) sont transférées le long d'une ligne droite (89).

6. Un dispositif d'enregistrement à disques magnétiques selon la revendication 5, caractérisé en ce que le dispositif de positionnement de têtes magnétiques (82, 83) de type linéaire comporte un organe de support qui comprend un organe de suspension (83) qui est destiné à suspendre de façon flexible la tête magnétique d'asservissement (81) et la tête magnétique de données (81a) à une première extrémité de l'organe de suspension, et un bras de support rigide (82) qui est fixé à une partie de bord de l'organe de suspension (83), à une seconde extrémité de l'organe de suspension (83) qui est opposée à la première extrémité, grâce à quoi l'axe longitudinal de l'organe de suspension (83) est orienté dans la direction radiale du disque magnétique (43, 44).

7. Un dispositif d'enregistrement à disques magnétiques selon l'une quelconque des revendications 1 à 6, caractérisé en ce que n têtes magnétiques (47-56), comprenant la tête magnétique de données et la tête magnétique d'asservissement, sont respectivement disposées sur n cylindres ayant chacun un rayon différent des autres, avec un pas radial fixé, chaque cylindre étant défini comme un plan cylindrique virtuel ayant un axe qui coîncide avec l'axe de rotation du disque magnétique, et n désignant un entier.

8. Un dispositif d'enregistrement à disques magnétiques selon la revendication 7, caractérisé en ce que l'entier n est égal à 2.

9. Un dispositif d'enregistrement à disques magnétiques selon la revendication 8, caractérisé en ce que l'organe de suspension comprend un organe à ressort (157, 158) ayant une partie de base (158) et deux branches (157a, 157b) qui s'étendent à partir de la partie de base (158), ces branches supportant de façon flexible deux têtes magnétiques (151, 152) à leurs extrémités libres respectives, par l'intermédiaire de ressorts respectifs réalisant une suspension à cardans, l'organe à ressort (157, 158) consistant en une seule pièce formée à partir d'une lame mince d'un matériau élastique.
